# NEUE EUROPÄISCHE PATENTSCHRIFT

(11) **EP 2 357 276 B2**
(45) Veröffentlichungstag und Bekanntmachung des Hinweises auf die Entscheidung über den Einspruch: **27.01.2016**
(45) Hinweis auf die Patenterteilung: 12.09.2012
(21) Anmeldenummer: 10152222.5
(22) Anmeldetag: 01.02.2010
(51) Int. Cl.: D06N 3/08, B32B 27/12, B32B 5/18

(54) **Mehrschichtiges Flächengebilde und Verfahren zu seiner Herstellung**
Multi-layer textile sheet and method for its production
Structure plate multicouche et son procédé de fabrication

(43) Veröffentlichungstag der Anmeldung: 17.08.2011
(73) Patentinhaber: Benecke-Kaliko AG, 30419 Hannover (DE)
(72) Erfinder: Freudenmann, Roland, Dr., 30900 Wedemark (DE); Mielke, Dirk, 30966 Hemmingen (DE); Seidel, Christian, Dr., 30163 Hannover (DE); Bühring, Jürgen, Dr., 30900 Wedemark (DE); Iben, Dirk, Dr., 23611 Sereetz (DE)
(74) Vertreter: Finger, Karsten

(56) Entgegenhaltungen:
- EP-A1- 0 768 336
- EP-A1- 1 063 257
- EP-A1- 1 063 257
- EP-A1- 1 813 645
- DD-A1- 130 491
- DE-A1- 2 546 900
- DE-A1- 10 216 881
- DE-A1- 10 216 885
- DE-A1- 19 914 798
- DE-A1-102005 056 222
- GB-A- 2 320 503
- US-A- 4 176 210
- US-A- 4 603 074
- DATABASE WPI Week 198937 Thomson Scientific, London, GB; AN 1989-269491 XP002591940 & SU 1 467 067 A1 (VLADIMIR CHEM WKS) 23. März 1989 (1989-03-23)
- DATABASE WPI Week 200825 Thomson Scientific, London, GB; AN 2008-D48744 XP002591941 & RU 2 315 070 C1 (PERM GUNPOWDER WKS) 20. Januar 2008 (2008-01-20)
- DATABASE WPI Week 200158 Thomson Scientific, London, GB; AN 2001-528264 XP002591942 & RU 2 171 325 C1 (FILM MATERIALS & SYNTHETIC LEATHER INST) 27. Juli 2001 (2001-07-27)

## Beschreibung

### Mehrschichtiges Flächengebilde und Verfahren zu seiner Herstellung

Die Erfindung betrifft ein mehrschichtiges Flächengebilde, aufweisend zumindest eine textile Trägerschicht, zumindest eine geschäumte Schicht aus weichmacherhaltigem Polyvinylchlorid, zumindest eine Deckschicht aus weichmacherhaltigem Polyvinylchlorid und zumindest eine nach außen weisende Lackschicht auf der Deckschicht aufweist. Die Erfindung betrifft ferner ein Verfahren zur Herstellung des mehrschichtigen Flächengebildes sowie ein aus einem Flächengebilde bestehendes Innenverkleidungsteil für ein Fahrzeug.

Flächengebilde aus weichmacherhaltigem Polyvinylchlorid auf einer textilen Trägerschicht sind für die Innenverkleidung von Kraftfahrzeugen, für Möbel, Taschen oder ähnliches, hinlänglich bekannt und werden z. B. in Fahrzeugen als Überzug von Sitzen und Türeinsätzen verwendet. Man bezeichnet derartige Flächengebilde landläufig auch als Kunstleder. Sie werden z. B. in der DD 130491 A1 beschrieben. Die Flächengebilde besitzen üblicherweise einen mehrschichtigen Aufbau, sind oft unterschäumt und weisen auf ihrer Oberseite eine dreidimensional strukturierte, geprägte Oberfläche auf, nämlich eine so genannte Musterung oder Narbung in verschiedensten Formen und Ausführungen. Der mehrschichtige Aufbau besteht oft aus einer oberen ggf. lackierten Deck- oder Dekorschicht, die geprägt ist, ggf. einer geschäumten Zwischenschicht und einer textilen Trägerschicht, die z. B. über eine Kaschierklebstoffschicht mit den anderen Schichten verbunden ist.

Als Weichmacher in den Schichten aus Polyvinylchlorid (PVC) im Kunstleder werden vorwiegend Phthalate, wie Diisononylphthalat (DINP) oder Diisodecylphthalat (DIDP), Sebacate, wie Dioctylsebacat (DOS), Trimellitate, wie Tri-2-ethylhexyltrimellitat (TOTM), oder ähnliche, auf Erdöl basierende Verbindungen eingesetzt. Es ist auch z. B. aus der EP 1 294 799 B1 bekannt, als Weichmacher für PVC Fettsäureprodukte auf der Basis von Pflanzenölen zu verwenden.

Für die textile Trägerschicht können unterschiedliche Materialien eingesetzt werden, die in Form von Gestricken, Gewirken, Geweben oder Vliesen vorliegen können. Als Materialbasis dienen in der Regel Polyester, Baumwolle, Polyamid oder Mischgewebe/-gewirke daraus, wobei Polyester und Polyamid zu den Chemiefasern aus synthetischen Polymeren (Synthesefasern) zählen.

Die Flächengebilde werden in der Regel im Streichverfahren mittels Umkehrbeschichtung bzw. Direktbeschichtung hergestellt. Dabei werden so genannte E-PVC-Typen, die mittels Verfahren der Emulsionspolymerisation hergestellt werden, eingesetzt. E-PVC-Typen weisen mit Weichmacher gemischt eine pastöse, flüssige Konsistenz auf und sind so im Streichverfahren verarbeitbar. Ein weiteres mögliches Herstellverfahren sieht ein Kalandieren einzelner Schichten vor. Hier können auch so genannte S-PVC-Typen eingesetzt werden. S-PVC wird mittels Verfahren der Suspensionspolymerisation hergestellt. Aufgrund seiner festen Konsistenz ist mit S-PVC in der Regel ein Streichverfahren nicht durchführbar. Erst durch die Aufschlussaggregate des Kalanders wie z. B. einem Kneter oder Extruder wird die S-PVC-Zusammensetzung unter erhöhter Temperatur verflüssigt und kann mittels der Kalanderwalzen zur Folie geformt werden. Spezielle Mikro-Suspensions-PVC-Typen verhalten sich jedoch analog E-PVC.

Flächengebilde mit Schichten aus weichmacherhaltigem Polyvinylchlorid weisen bisher den Nachteil auf, dass sie bei Wärmelagerung bei erhöhten Temperaturen, insbesondere mehr als 100 °C, durch den Abbau des PVC-Moleküls vergilben, so dass sie beispielsweise für KFZ-Instrumententafeln (Armaturenbretter) nur zum Einsatz kommen können, wenn das Vergilben durch eine dunkle Grundfarbe, insbesondere Schwarz oder Dunkelbraun, des Flächengebildes überdeckt wird. Die Oberflächentemperatur von KFZ-Instrumententafeln erreicht beim Stehen des Fahrzeuges in der Sonne Temperaturen von über 100 °C. Übliche PVC-Stabilisatoren konnten das Problem des Vergilbens in E-PVC-haltigen Flächengebilden bisher nicht verhindern. Werden gemäß dem aktuellen Trend hellere Farben für die Instrumententafeln mit Nähkleid gewünscht, wird derzeit daher Echtleder oder Kunstleder auf der Basis von Polyurethan eingesetzt.

Der Erfindung liegt die Aufgabe zu Grunde, ein mehrschichtiges Flächengebilde mit Schichten aus weichmacherhaltigem Polyvinylchlorid der eingangs genannten Art bereit zu stellen, das sich durch eine verringerte Neigung zum Vergilben bei Wärmelagerung auszeichnet und damit eine höhere Farbbeständigkeit aufweist.

Gelöst wird die Aufgabe erfindungsgemäß dadurch, dass der Polyvinylchlorid-Anteil in der Deckschicht zu zumindest 50 Gew.-% auf einem Polyvinylchlorid basiert, welches nach dem Verfahren der Suspensionspolymerisation hergestellt wurde (S-PVC), und die Zusammensetzung für die Deckschicht einen Calciumhydroxid-Stabilisator oder einen Calciumhydroxid-Stabilisator und einen Ca/Zn-Stabilisator, der 1 bis 3 Gew.-% Calcium und 1 bis 2 Gew.-% Zink enthält, aufweist.

Überraschenderweise hat sich herausgestellt, dass eine verbesserte Farbbeständigkeit erzielt werden kann, d. h., dass nach Lagerung von 2 Wochen bei 120 °C selbst bei einer hellgrauen oder anderen hellen Einfärbung des Flächengebildes eine Bewertung nach Graumaßstab von GS ≥ 4 erhalten wird. Bei Verwendung des Flächengebildes als Oberbeschichtung für eine KFZ-Instrumententafel beobachtet man eine deutlich schwächere Vergilbungsneigung. Dieser Effekt wurde nur bei Kombination des Calciumhydroxid-Stabilisators oder des Calciumhydroxid-Stabilisators mit dem speziellen Ca/Zn-Stabilisator mit zumindest 50 Gew.-% S-PVC in der Deckschicht, bezogen auf den Gesamt PVC-Anteil in der Deckschicht, beobachtet. Bei Verwendung dieser Stabilisatoren in reinem E-PVC wurde dieser Effekt nicht beobachtet.

Die PVC-Anteil der Zusammensetzung für die Deckschicht basiert zu zumindest 50 Gew.-% auf S-PVC, der restliche PVC-Anteil kann durch E-PVC gebildet werden. Vorzugsweise basiert der PVC-Anteil der Deckschicht jedoch zu zumindest 75 Gew.-%, besonders bevorzugt zu zumindest 95 Gew.-% auf S-PVC, dadurch ergeben sich verarbeitungstechnische Vorteile beim Kalandrieren der Deckschicht und Vorteile in der Wärmestabilität.

Als Stabilisatoren enthält die Zusammensetzung für die Deckschicht einen Calciumhydroxid-Stabilisator oder einen Calciumhydroxid-Stabilisator und einen speziellen Ca/Zn-Stabilisator.
Bei dem Ca/Zn-Stabilisator handelt es sich um die in der PVC-Verarbeitung üblichen Metallseifen-Stabilisatoren. Wichtig ist der spezielle Anteil von 1 bis 3 Gew.-% Calcium und 1 bis 2 Gew.-% Zink in diesem Stabilisator-Typ.

Um einen besonders guten Schutz gegen Vergilbung zu erzielen, hat es sich als vorteilhaft erwiesen, wenn die Zusammensetzung für die Deckschicht 0,5 bis 10 phr (parts per hundert parts of resin by weight), vorzugsweise 2 bis 6 phr, des Ca/Zn-Stabilisators enthält.

Die Zusammensetzung für die Deckschicht enthält bevorzugt 1 bis 20 phr, vorzugsweise 3 bis 10 phr, eines Calciumhydroxid-Stabilisators.

Gemäß einer bevorzugten Weiterbildung der Erfindung enthält die Zusammensetzung für die Deckschicht ein Perchlorat als weiteren Stabilisator. Dadurch wird die Farbbeständigkeit weiter verbessert und Aminbeständigkeit wird verbessert. Bezüglich der Aminbeständigkeit lassen sich Werte nach Graumaßstab von ≥ 4,5 erzielen.

Besonders gut im Hinblick auf die Aminbeständigkeit ist der Einsatz eines Natriumperchlorates als Perchlorat. Es können aber auch andere Perchlorate eingesetzt werden.

Enthält die Zusammensetzung für die Deckschicht den Ca/Zn-Stabilisator, beträgt das Gewichtsverhältnis von Calcium plus Zink aus dem Ca/Zn-Stabilisator zu Perchlorat in der Zusammensetzung für die Deckschicht gemäß einer vorteilhaften Ausgestaltung der Erfindung 1:0,5 bis 1:10, vorzugsweise 1:1 bis 1:6. Bei Unterschreitung dieser Verhältnisse wird die Aminbeständigkeit schlechter und ist eine stärkere Verfärbung bei Wärmelagerung zu beobachten. Zu hohe Mengen an Stabilisator verteuern das Flächengebilde ohne zusätzlichen Nutzen und führen teilweise zu einer Verschlechterung der Wärmestabilität.

Enthält die Zusammensetzung für die Deckschicht Calciumhydroxid als Stabilisator, beträgt das Gewichtsverhältnis von Calciumhydroxid-Stabilisator, also Ca(OH)₂ zu Perchlorat in der Zusammensetzung für die Deckschicht 20:1 bis 1:1, vorzugsweise 8:1 bis 14:1.

Neben den genannten Stabilisatoren kann die Zusammensetzung für die Deckschicht noch weitere PVC-Stabilisatoren, wie sie dem Fachmann bekannt sind, in üblichen Mengen enthalten. Zu diesen Stabilisatoren zählen CH-acide Verbindungen (wie β-Diketone, Dihydropyridine, Acetylacetonate), Antioxidantien (wie gehinderte Phenole, sterisch gehinderte Amine), Polyole, Hydrotylcite, Zeolithe oder organische Stabilisatoren.

Um die Kondensation ausgedampfter, flüchtiger Stoffe auf der Innenseite von Glasscheiben im Kraftfahrzeug-Fahrgastraum unter Bildung lichtstreuender Filme, das so genannte Fogging, zu verringern, ist es von Vorteil, wenn die Weichmacher in den PVC-Schichten des Flächengebildes auf Phthalat und/oder Trimellitat basieren und ein Molekulargewicht M_{w} von zumindest 470 g/mol aufweisen. Damit gelingt es, die Emissionforderung gemäß VDA 278 mit einem VOC-Wert ≤ 100 ppm und einem FOG-Wert ≤ 250 ppm sowie ein Fogging gemäß DIN 75201 mit einem Kondensatwert < 1,3 mg gemessen über 16 h bei 120°C zu erfüllen.

Die in den Flächengebilden vorliegenden PVC-Schichten enthalten neben Weichmacher und Stabilisatoren die üblichen Additive wie z. B. Alterungsschutzmittel (z. B. Antioxidantien), Füllstoffe, Flammschutzmittel (z. B. Antimontrioxid), Treibmittel (z. B. Azodicarbonamid), Pigmente (z. B. Ruß, Titandioxid) und weitere Hilfssubstanzen (z. B. Viskositätshilfsmittel, Haftvermittler etc.).

Die textile Trägerschicht des Flächengebildes kann auf Natur- oder Chemiefasern basieren, die auch als Hybridfasern oder Mischgewebe, -gestricke oder -gewirke eingesetzt werden können. Es kann beispielsweise ein Gestrick aus Baumwoll- und Polyesterfäden, bevorzugt in einem Mischungsverhältnis von 35:65, eingesetzt werden.

Die textile Trägerschicht kann als Maschenware in Form von Gestricken oder Gewirken vorliegen. Es können aber auch Gewebe und Vliese eingesetzt werden. Um das für die Anwendung als Kunstleder gewünschte Eigenschaftsprofil zu erzielen, liegt die textile Trägerschicht vorteilhafterweise als Gestrick vor.

Das mehrschichtige Flächengebilde weist zumindest eine geschäumte Schicht aus weichmacherhaltigem Polyvinylchlorid auf. Damit kann eine "weiche" Griffigkeit der Folie erzielt werden, d. h. der Kunde erhält Flächengebilde, welche sich besonders angenehm und weich anfühlen.

Weiterhin weist das mehrschichtige Flächengebilde eine Lackschicht auf, die nach außen weisend auf die Deckschicht aufgebracht ist. Als Lacke können solche verwendet werden, wie sie von Dr. Iben bei der SKZ Pastentagung in Würzburg am 27.09.2001 vorgestellt wurden. Auch die Arten der Aufbringung wurden dort beschrieben. Das mehrschichtige Flächengebilde weist vorzugsweise eine Polyurethan und/oder Polyvinylchlorid/Acrylat enthaltende Lackschicht auf. Diese Lackschicht sorgt dafür, dass die Abriebseigenschaften verbessert werden und eine hohe Sonnenmilchbeständigkeit erzielt wird. Weiterhin können mit diesen Lacken Anti-Knarz Eigenschaften eingestellt werden. Besonders vorteilhaft sind Lacke auf Dispersionsbasis, also auf Wasserbasis, um die niedrigen Emissionsvorgaben nach VDA 278 mit VOC ≤ 100 ppm zu erfüllen.

Für ein optimales Produkt im Hinblick auf das gewünschte Eigenschaftsprofil des Flächengebildes, insbesondere eines Kunstleders, hat es sich als vorteilhaft erwiesen, wenn das mehrschichtige Flächengebilde folgenden Aufbau in der angegeben Reihenfolge aufweist:
- Lackschicht, enthaltend Polyurethan und/oder PVC-Acrylat,
- Deckschicht aus weichmacherhaltigem Polyvinylchlorid,
- ggf. geschäumte Zwischenschicht aus weichmacherhaltigem Polyvinylchlorid,
- Kaschierklebstoffschicht,
- textile Trägerschicht.

Den einzelnen Schichten kommen dabei unterschiedliche Aufgaben zu. Durch die zumeist transparente Lackschicht erfolgt die Glanzgradeinstellung sowie die Einstellung von Oberflächeneigenschaften wie Abriebfestigkeit, Haptik, Kratz-, Wärme-, Licht-, und Medienbeständigkeit gegen Reiniger. Die Deckschicht aus weichmacherhaltigem Polyvinylchlorid wird zur Farbgebung genutzt und wirkt unterstützend in Bezug auf die Beständigkeit gegen Abrieb, Kratzer und Reinigungsmittel. Sie sollte wärme- und lichtbeständig sein. Die Zwischenschicht kann einen geschäumten oder kompakten Aufbau haben. Die Schaumschicht dient vor allem zur Erreichung einer lederähnlichen Haptik. Die Zwischenschicht dient auch der Vermeidung des Durchdrückens der Textilstruktur beim rückseitigen Kaschieren des Verbunds auf ein Bauteil. Die textile Trägerschicht ist im Wesentlichen für die mechanischen Eigenschaften wie Dehnbarkeit, Zug- und Weiterreißfestigkeit des gesamten Flächengebildes verantwortlich und ist entsprechend auszuwählen.

Vorzugsweise ist das mehrschichtige Flächengebilde ein Kunstleder, welches sich durch eine hohe Farbbeständigkeit bei Wärmelagerung auszeichnet.

Ein besonders geeignetes Verfahren zur Herstellung des erfindungsgemäßen mehrschichtigen Flächengebildes besteht in einer Kombination von Umkehrstreichverfahren und Kalandrier- oder Extrusionsverfahren. Dabei wird zunächst die Deckschicht aus weichmacherhaltigem Polyvinylchlorid mit den üblichen zugehörigen Additiven mittels eines Kalandrier- oder eines Extrudierverfahrens hergestellt.

Danach oder daneben wird der "Unterbau" der Folie, nämlich eine oder mehrere Schichten aus weichmacherhaltigem Polyvinylchlorid mit der textilen Trägerschicht im Umkehrstreichverfahren hergestellt, wobei sukzessiv die Schicht(en) aus weichmacherhaltigem Polyvinylchlorid auf ein Trägermaterial, d. h. vorzugsweise auf eine Trägerfolie aus z. B. Papier, aufgestrichen werden, auf die letzte Schicht die textile Trägerschicht aufgelegt wird und anschließend der durch das Aufstreichen entstandene Schichtverbund inklusive der textilen Trägerschicht getrocknet und vom Trägermaterial abgezogen wird. Damit ist für diesen Teilverbund das Umkehrstreichverfahren beendet.

Danach erfolgt das Zusammenfügen von Deckschicht und weiteren Schichten. Hierzu wird die im Kalandrier- oder Extrudierverfahren hergestellte Deckschicht auf den im Umkehrstreichverfahren entstandenen Schichtverbund aus weiteren Schichten und textiler Trägerschicht aufkaschiert, in der Regel durch Verkleben mittels Kleber oder das so genannte thermisches Kaschieren, nämlich das Verkleben in der Wärme.

Anschließend oder zuvor erfolgt eine Lackierung und ggf. Prägung der Außenoberfläche der Deckschicht, wodurch das erfindungsgemäße mehrschichtige Flächengebilde nun vervollständigt ist. Das erfindungsgemäße Produkt kann auch noch mit weiteren Schichten wie z.B. Schäume und weitere Textilien, kaschiert oder verbunden werden, die zur Verarbeitung oder Wertanmutung nötig sind. Die Reihenfolge der Verfahrensschritte kann, wie oben dargestellt, variieren.

Besonders vorteilhaft lässt sich das erfindungsgemäße Flächengebilde als Innenverkleidungsteil für ein Fahrzeug verwenden, insbesondere für eine KFZ-Instrumententafel, einsetzen, welches auch bei hellen Farben eine hohe Farbbeständigkeit und eine geringe Tendenz zum Vergilben aufweist.

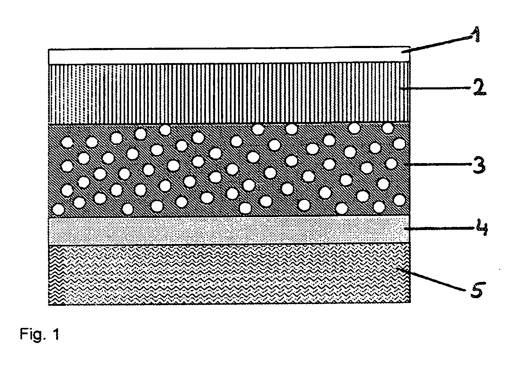

Anhand eines Ausführungsbeispieles soll die Erfindung näher erläutert werden. Es zeigt
- Fig. 1: den Aufbau einer Flächengebildes im Schnitt

Die Fig. 1 zeigt den Aufbau eines Flächengebildes für eine KFZ-Instrumententafel im Schnitt. Unterhalb einer Lackschicht 1, die im Wesentlichen auf Polyurethan und/oder PCV-Acrylat basiert und eine Stärke von 2 bis 10 µm aufweist, ist eine Deckschicht 2 angeordnet, die auf S-PVC und Weichmacher, einen Ca/Zn-Stabilisator und weitere Additive enthält. Darauf folgt eine herkömmliche Zwischenschicht 3 aus geschäumtem E-PVC mit Weichmacher, Stabilisatoren, Treibmitteln und weiteren Additiven. Auf die Zwischenschicht 3 ist von unten eine textile Trägerschicht 5 mittels eines Klebers 4 aus E-PVC mit Weichmacher, Stabilisatoren und weiteren Additiven aufkaschiert ist. Die textile Trägerschicht 5 besteht bei diesem Ausführungsbeispiel aus einem Gestrick aus Baumwolle und Polyester.

In der folgenden Tabelle 1 sind für die Mischungszusammensetzung für die Polyvinylchloriddeckschicht 2 möglichen Mengenbereichen sowie ein spezielles Beispiel angegeben.

**Tabelle 1**

| Zusammensetzung | Mengenbereiche [Gew.-Teile] | spez. Beispiel [Gew.-Teile] |
|---|---|---|
| S-PVC | 50-100 | 100 |
| E-PVC | 0-50 | 0 |
| Weichmacher^{a} | 45-130 | 61 |
| Ca/Zn-Stabilisator^{b} | 0,5-10 | 4 |
| Perchlorat-Stabilisator | 0,2-4 | 0,8 |
| Gleitmittel^{c} | 0-1 | 0,2 |
| Pigmente | 0-20 | unterschiedlich je Farbe |
| Weitere Addidive^{d} | 0-100 | ca. 1 |

| | | |
|---|---|---|
| ^{a} auf der Basis von Trimellitat und/oder Phthalat ^{b} Ca-Gehalt: ca. 2,1 Gew.-%, Zn-Gehalt: ca. 1,2 Gew.-% ^{c} Polyethylen-Wachs und/oder Acrylat ^{d} Flammschutzmittel, Füllstoffe etc. | | |

Mit den in der Tabelle 1 angegebenen Zusammensetzungen lassen sich mehrschichtige Flächengebilde herstellen, die sich durch eine geringe Tendenz zur Vergilbung und eine hohe Farbbeständigkeit auszeichnen, auch wenn sie über längere Zeit Temperaturen von mehr als 100 °C ausgesetzt sind. Sie eignen sich daher zum Beispiel als Kunstleder für die Instrumententafeln von KFZ.

### Bezugszeichenliste

### (Teil der Beschreibung)

- 1: Lackschicht
- 2: Deckschicht aus Polyvinylchlorid
- 3: Zwischenschicht aus geschäumtem Polyvinylchlorid
- 4: Kaschierklebstoffschicht aus Polyvinylchlorid
- 5: textile Trägerschicht

## Patentansprüche

1. Mehrschichtiges Flächengebilde, aufweisend zumindest eine textile Trägerschicht (5), zumindest eine geschäumte Schicht (3) aus weichmacherhaltigem Polyvinylchlorid, zumindest eine Deckschicht (2) aus weichmacherhaltigem Polyvinylchlorid und zumindest eine nach außen weisende Lackschicht (1) auf der Deckschicht, **dadurch gekennzeichnet, dass** der Polyvinylchlorid-Anteil in der Deckschicht zu zumindest 50 Gew.-% auf einem Polyvinylchlorid basiert, welches nach dem Verfahren der Suspensionspolymerisation hergestellt wurde (S-PVC), und die Zusammensetzung für die Deckschicht einen Calciumhydroxid-Stabilisator oder einen Calciumhydroxid-Stabilisator und einen Ca/Zn-Stabilisator, der 1 bis 3 Gew.-% Calcium und 1 bis 2 Gew.-% Zink enthält, aufweist.

2. Mehrschichtiges Flächengebilde nach Anspruch 1, **dadurch gekennzeichnet, dass** der Polyvinylchlorid-Anteil in der Deckschicht zu zumindest 75 Gew.-% auf S-PVC basiert.

3. Mehrschichtiges Flächengebilde nach Anspruch 2, **dadurch gekennzeichnet, dass** der Polyvinylchlorid-Anteil in der Deckschicht zu zumindest 95 Gew.-% auf S-PVC basiert.

4. Mehrschichtiges Flächengebilde nach zumindest einem der Ansprüche 1 bis 3,
**dadurch gekennzeichnet, dass** die Zusammensetzung für die Deckschicht 0,5 bis 10 phr (parts per hundert parts of resin by weight), vorzugsweise 2 bis 6 phr, des Ca/Zn-Stabilisators enthält.

5. Mehrschichtiges Flächengebilde nach zumindest einem der Ansprüche 1 bis 3,
**dadurch gekennzeichnet, dass** die Zusammensetzung für die Deckschicht 1 bis 20 phr (parts per hundert parts of resin by weight), vorzugsweise 3 bis 10 phr, eines Calciumhydroxid-Stabilisators enthält.

6. Mehrschichtiges Flächengebilde nach zumindest einem der Ansprüche 1 bis 5, **dadurch gekennzeichnet, dass** die Zusammensetzung für die Deckschicht ein Perchlorat als weiteren Stabilisator enthält.

7. Mehrschichtiges Flächengebilde nach Anspruch 6, **dadurch gekennzeichnet, dass** das Perchlorat Natriumperchlorat ist.

8. Mehrschichtiges Flächengebilde nach Anspruch 6 oder 7, **dadurch gekennzeichnet, dass** das Gewichtsverhältnis von Calcium plus Zink aus dem Ca/Zn-Stabilisator zu Perchlorat in der Zusammensetzung für die Deckschicht 1:0,5 bis 1:10, vorzugsweise 1:1 bis 1:6, beträgt.

9. Mehrschichtiges Flächengebilde nach Anspruch 7, **dadurch gekennzeichnet, dass** das Gewichtsverhältnis von Calciumhydroxid-Stabilisator zu Perchlorat in der Zusammensetzung für die Deckschicht 20:1 bis 1:1, vorzugsweise 8:1 bis 14:1, beträgt.

10. Mehrschichtiges Flächengebilde nach zumindest einem der Ansprüche 1 bis 9,
**dadurch gekennzeichnet, dass** die Weichmacher in der PVC-Schichten auf Phthalat und/oder Trimellitat basieren und ein Molekulargewicht M_{w} von zumindest 470 g/mol aufweisen.

11. Mehrschichtiges Flächengebilde nach zumindest einem der Ansprüche 1 bis 10,
**dadurch gekennzeichnet, dass** es ein Kunstleder ist.

12. Verfahren zur Herstellung eines mehrschichtigen Flächengebildes nach einem der Ansprüche 1 bis 11, bei dem die folgenden Verfahrensschritte durchgeführt werden:
- Herstellung der Deckschicht(en) (2) aus weichmacherhaltigem Polyvinylchlorid mittels eines Kalandrier- oder eines Extrudierverfahrens,
- Herstellung weiterer Schichten (3,4) aus weichmacherhaltigem Polyvinylchlorid mit der textilen Trägerschicht (5) im Umkehrstreichverfahren, wobei
a) sukzessiv die Schicht(en) aus weichmacherhaltigem Polyvinylchlorid auf ein Trägermaterial aufgestrichen werden,
b) auf die letzte Schicht die textile Trägerschicht (5) aufgelegt wird und
c) der durch das Aufstreichen entstandene Schichtverbund getrocknet und vom Trägermaterial abgezogen wird,
- Aufkaschieren der im Kalandrier- oder Extrudierverfahren hergestellten Deckschicht(en) (2) auf den im Umkehrstreichverfahren entstandenen Schichtverbund aus weiteren Schichten (3, 4) und
- Lackierung und ggf. Prägung der Außenoberfläche der Deckschicht(en) (2).

13. Innenverkleidungsteil für ein Fahrzeug, insbesondere für eine KFZ-Instrumententafel, bestehend aus einem mehrschichtigen Flächengebilde nach einem der Ansprüche 1 bis 12.

## Claims

1. Multilayer sheet-like structure, comprising at least one textile backing layer (5), at least one foamed layer (3) made of plasticized polyvinyl chloride, at least one outer layer (2) made of plasticized polyvinyl chloride, and at least one outward-facing lacquer layer (1) on the outer layer, **characterized in that** at least 50% by weight of the polyvinyl chloride content in the outer layer is based on a polyvinyl chloride which has been produced by the suspension polymerization process (SPVC), and the composition for the outer layer comprises a calcium hydroxide stabilizer or a calcium hydroxide stabilizer and a Ca/Zn stabilizer which comprises from 1 to 3% by weight of calcium and from 1 to 2% by weight of zinc.

2. Multilayer sheet-like structure according to Claim 1, **characterized in that** at least 75% by weight of the polyvinyl chloride content in the outer layer is based on SPVC.

3. Multilayer sheet-like structure according to Claim 2, **characterized in that** at least 95% by weight of the polyvinyl chloride content in the outer layer is based on SPVC.

4. Multilayer sheet-like structure according to at least one of Claims 1 to 3, **characterized in that** the composition for the outer layer comprises from 0.5 to 10 phr (parts per hundred parts of resin by weight), preferably from 2 to 6 phr, of the Ca/Zn stabilizer.

5. Multilayer sheet-like structure according to at least one of Claims 1 to 3, **characterized in that** the composition for the outer layer comprises from 1 to 20 phr (parts per hundred parts of resin by weight), preferably from 3 to 10 phr, of a calcium hydroxide stabilizer.

6. Multilayer sheet-like structure according to at least one of Claims 1 to 5, **characterized in that** the composition for the outer layer comprises a perchlorate as further stabilizer.

7. Multilayer sheet-like structure according to Claim 6, **characterized in that** the perchlorate is sodium perchlorate.

8. Multilayer sheet-like structure according to Claim 6 or 7, **characterized in that** the ratio by weight of calcium plus zinc from the Ca/Zn stabilizer to perchlorate in the composition for the outer layer is from 1:0.5 to 1:10, preferably from 1:1 to 1:6.

9. Multilayer sheet-like structure according to Claim 7, **characterized in that** the ratio by weight of calcium hydroxide stabilizer to perchlorate in the composition for the outer layer is from 20:1 to 1:1, preferably from 8:1 to 14:1.

10. Multilayer sheet-like structure according to at least one of Claims 1 to 9, **characterized in that** the plasticizers in the PVC layers are based on phthalate and/or on trimellitate, and have a molar mass M_{w} of at least 470 g/mol.

11. Multilayer sheet-like structure according to at least one of Claims 1 to 10, **characterized in that** it is a synthetic leather.

12. Process for producing a multilayer sheet-like structure according to any of Claims 1 to 11, by carrying out the following steps:
- producing the outer layer(s) (2) made of plasticized polyvinyl chloride by means of a calendering process or of an extrusion process,
- producing further layers (3, 4) made of plasticized polyvinyl chloride with the textile backing layer (5) by the reverse coating process, where
a) the layer(s) made of plasticized polyvinyl chloride is/are successively coated onto a backing material,
b) the textile backing layer (5) is placed onto the final layer, and
c) the layer composite produced by the coating process is dried and peeled from the backing material,
- using lamination to apply the outer layer(s) (2) produced in the calendering process or extrusion process to the layer composite made of further layers (3, 4) produced in the reverse coating process, and
- lacquering and optional embossing of the external surface of the outer layer(s) (2).

13. Interior cladding component for a vehicle, in particular for a motor-vehicle instrument panel, composed of a multilayer sheet-like structure according to any of Claims 1 to 12.

## Revendications

1. Structure plate multicouche, comprenant au moins une couche de support textile (5), au moins une couche expansée (3) à base de poly(chlorure de vinyle) contenant un plastifiant, au moins une couche de recouvrement (2) à base de poly(chlorure de vinyle) contenant un plastifiant et, sur la couche de recouvrement, au moins une couche de laque (1) tournée vers l'extérieur, **caractérisée en ce que** la partie-poly(chlorure de vinyle) dans la couche de recouvrement est à raison d'au moins 50 % en poids à base d'un poly(chlorure de vinyle) qui a été préparé conformément au procédé de la polymérisation en suspension (S-PVC), et la composition de la couche de recouvrement comporte un stabilisant-hydroxyde de calcium ou un stabilisant-hydroxyde de calcium et un stabilisant-Ca/Zn qui contient 1 à 3 % en poids de calcium et 1 à 2 % en poids de zinc.

2. Structure plate multicouche selon la revendication 1, **caractérisée en ce que** la partie-poly(chlorure de vinyle) dans la couche de recouvrement est à raison d'au moins 75 % en poids à base de S-PVC.

3. Structure plate multicouche selon la revendication 2, **caractérisée en ce que** la partie-poly(chlorure de vinyle) dans la couche de recouvrement est à raison d'au moins 95 % en poids à base de S-PVC.

4. Structure plate multicouche selon au moins l'une quelconque des revendications 1 à 3, **caractérisée en ce que** la composition de la couche de recouvrement contient 0,5 à 10 phr (parties pour cent parties de résine en poids), de préférence 2 à 6 phr, du stabilisant-Ca/Zn.

5. Structure plate multicouche selon au moins l'une quelconque des revendications 1 à 3, **caractérisée en ce que** la composition de la couche de recouvrement contient 1 à 20 phr (parties pour cent parties de résine en poids), de préférence 3 à 10 phr, d'un stabilisant-hydroxyde de calcium.

6. Structure plate multicouche selon au moins l'une quelconque des revendications 1 à 5, **caractérisée en ce que** la composition de la couche de recouvrement contient un perchlorate en tant qu'autre stabilisant.

7. Structure plate multicouche selon la revendication 6, **caractérisée en ce que** le perchlorate est le perchlorate de sodium.

8. Structure plate multicouche selon la revendication 6 ou 7, **caractérisée en ce que** le rapport pondéral du calcium plus zinc du stabilisant-Ca/Zn au perchlorate dans la composition de la couche de recouvrement vaut de 1:0,5 à 1:10, de préférence de 1:1 à 1:6.

9. Structure plate multicouche selon la revendication 7, **caractérisée en ce que** le rapport pondéral du stabilisant-hydroxyde de calcium au perchlorate dans la composition de la couche de recouvrement vaut de 20:1 à 1:1, de préférence de 8:1 à 14:1.

10. Structure plate multicouche selon au moins l'une quelconque des revendications 1 à 9, **caractérisée en ce que** les plastifiants dans les couches de PVC sont à base de phtalate et/ou de trimellitate et présentent une masse moléculaire M_{w} d'au moins 470 g/mole.

11. Structure plate multicouche selon au moins l'une quelconque des revendications 1 à 10, **caractérisée en ce qu'**il s'agit d'un cuir artificiel.

12. Procédé pour la production d'une structure plate multicouche selon l'une quelconque des revendications 1 à 11, dans lequel on effectue les étapes suivantes de processus :
- production de la/des couche(s) de recouvrement (2) à partir de poly(chlorure de vinyle) contenant un plastifiant, au moyen d'un procédé de calandrage ou d'un procédé d'extrusion,
- production d'autres couches (3, 4) à partir de poly(chlorure de vinyle) contenant un plastifiant avec la couche de support textile (5) dans le procédé d'enduction inverse, dans lequel
a) on applique successivement la/les couche(s) de poly(chlorure de vinyle) contenant un plastifiant, sur un matériau de support,
b) on dépose sur la dernière couche la couche de support textile (5) et
c) on sèche le composite stratifié résultant de l'enduction et on le retire du matériau de support,
- contrecollage de la/des couche(s) de recouvrement (2), produites dans le procédé de calandrage ou d'extrusion, sur le composite stratifié d'autres couches (3, 4) formé dans le procédé d'enduction inverse et
- laquage et éventuellement gaufrage de la surface externe de la/des couche(s) de recouvrement (2)

13. Pièce d'habillage intérieur pour un véhicule, en particulier pour un tableau de bord d'automobile, consistant en une structure plate multicouche selon l'une quelconque des revendications 1 à 12.
